# EUROPÄISCHE PATENTANMELDUNG

(11) **EP 2 270 083 A1**
(43) Veröffentlichungstag der Anmeldung: **05.01.2011**
(21) Anmeldenummer: 10165591.8
(22) Anmeldetag: 10.06.2010
(51) Int. Cl.: C08J 11/28

(54) **Verfahren zur Herstellung von Polyolkomponenten aus Polyurethan-Hartschaumstoffabfällen**

(30) Priorität: 10.06.2009 DE 102009026898
(71) Anmelder: Lambda One Isoliertechnik GmbH, 4552 Wartberg/Krems (AT)
(72) Erfinder: Stoychev, Valentin, 15745, Wildau (DE); Naber, Bernhard W., 01987, Schwarzheide (DE)
(74) Vertreter: Ziebig, Marlene

(57) **Zusammenfassung**

Die Erfindung betrifft ein Verfahren zur Herstellung von Polyolkomponenten für Polyurethane aus Polyurethan-Hartschaumstoffabfällen durch kombinierte Aminolyse und Glykolyse, wobei Polyurethan-Hartschaumstoffe mit einem an sich bekannten Gemisch aus einem oder mehreren Glykolen und einem oder mehreren aliphatischen Aminen umgesetzt werden, wobei ein Tallölfettsäuregemisch umfassend Linolsäure und konjugierte C₁₈-Fettsäuren, Ölsäure, Octadeca-5,9,12-triensäure und gesättigte Fettsäuren oder ein Rapsölfettsäuregemisch umfassend Palmitinsäure, Stearinsäure, Ölsäure, Linolsäure, Linolensäure und Eicosensäure zugegeben werden.

## Beschreibung

Die Erfindung betrifft ein Verfahren zur Herstellung von Polyolkomponenten aus Polyurethan-Hartschaumstoffabfällen durch Solvolyse .

Die Erfindung ist auf ein Verfahren gerichtet, durch das neuartige, niedrigviskose Polyolkomponenten mit sehr niedrigem Gehalt an primären und/oder sekundären Aminen zur Verfügung gestellt werden, die allein oder in Gemischen mit weiteren Hydroxylverbindungen zu Polyurethansystemen formuliert werden können. Diese Polyurethansysteme ergeben bei geeigneter weiterer Verarbeitung Hartschaumstoffe, Beschichtungen, Vergussmassen oder Gießharze.

Das chemische Recycling von Polyurethanen durch deren Solvolyse ist bekannt, siehe z. B. W. Raßhofer, Das Recycling von Polyurethanen, Carl Hanser Verlag, München, 1995. Zur Solvolyse der Polyurethane werden vor allem Glykole eingesetzt. Diese können zusätzlich Katalysatoren oder spezielle Additive enthalten. Weiterhin werden zur Solvolyse Aminoalkohole verwendet, siehe z. B. USP 3,708,440. Nach einem weiteren Verfahren wird die Solvolyse mit Gemischen von Glykolen und sekundären aliphatischen Aminen durchgeführt, wodurch die Reaktionszeit und - temperatur wesentlich reduziert werden können, siehe DE-PS 199 17 932. In den Fällen, in denen Glykole allein verwendet werden, entstehen auf Grund der langen Reaktionszeit und der hohen Reaktionstemperatur in jedem Falle aromatische Diamine, in Abhängigkeit vom ursprünglich verwendeten Di- oder Polyisocyanat Toluylendiamine oder 4,4'-Diphenylmethandiamin. Diese Stoffe sind kanzerogen, so dass gemäß den gegenwärtig gültigen gesetzlichen Bestimmungen deren Menge unterhalb 0,1 Gew.-% des Reaktionsproduktes liegen muss. Ein Weg zur Reduzierung der aromatischen Amine in solchen Glykolysaten wird in der DE-OS 42 34 335 gelehrt. Danach werden während der Glykolyse Glycidether oder epoxydierte Öle derart zugegeben, dass die entstehenden Amine schnell "gefangen" werden und zu Aminoalkoholen reagieren. Nach der US-PS 4,014,809 werden für fluochlorkohlenwasserstoffgetriebene Polyurethan-Hartschaumstoffe Gemische aus Glykolen und Alkanolaminen verwendet, wobei jedoch das zwangsweise entstehende 4,4'-Diaminodiphenylmethan nicht erwähnt wird. Durch die Kombination von Glykolen und sekundären aliphatischen Aminen gemäß DE-PS 199 17 932 wird nicht nur die Reaktionszeit verringert, sondern auch die Reaktionstemperatur ist niedriger und damit die Reaktionsgeschwindigkeit zur Bildung der primären aromatischen Amine.

Nach der Lehre der US-PS 6,802,997 B2 werden aus dem Kühlschrankrecycling gewonnene reine Polyurethan-Hartschaumpulver durch Glykolyse oder Aminolyse in Gegenwart von Wasser verflüssigt und das Reaktionsprodukt wieder zur Herstellung von Hartschaumstoffen eingesetzt. Zur Reduzierung der Viskosität der Glykolysate werden in bestimmten Fällen hochmolekulare Polyetherakohole zugesetzt, siehe z.B. EP 0 835 901 A2, wobei das ursprünglich verwendete Glykol z. T. abdestiliert wird, siehe z. B. US-PS 4,159,972.

Die überwiegende Mehrzahl der beschriebenen technischen Lösungen zur Solvolyse von Polyurethanen bezieht sich auf Weichschaumstoffe, nur wenige sind auf die Verflüssigung von Polyurethan-Hartschaumstoffen und zum direkten Wiedereinsatz in Formulierungen zu deren Herstellung gerichtet. Die drei wesentlichen Gründe dafür sind die Entstehung von primären aromatischen Aminen während der Umsetzung, die hohe Viskosität der Reaktionsprodukte (und in einigen Fällen deren Thixotropie) und schließlich der Verunreinigungsgrad der Hartschaumstoffe aus den unterschiedlichen Verwertungsverfahren.

Aufgabe der Erfindung ist es, auch aus kontaminierten Polyurethan-Hartschaumstoffabfällen durch die Solvolyse mit geeigneten Reaktionskomponenten ein niederviskoses Solvolysat mit einem sehr niedrigen Gehalt an primären aromatischen Aminen zur Verfügung zu stellen.

Erfindungsgemäß wird die Aufgabe dadurch gelöst, dass während oder nach der Umsetzung der Polyurethan-Hartschaumstoffe mit einem an sich bekannten Gemisch aus einem oder mehreren niedermolekularen Glykolen und einem oder mehreren aliphatischen Aminen ein Tallölfettsäuregemisch umfassend Linolsäure und konjugierte C₁₈-Fettsäuren, Ölsäure, Octadeca-5,9,12-triensäure und gesättigte Fettsäuren oder ein Rapsölfettsäuregemisch umfassend Palmitinsäure, Stearinsäure, Ölsäure, Linolsäure, Linolensäure und Eicosensäure zugegeben werden. Überraschend ist die Amidbildung wesentlich verbessert.

Vorzugsweise werden die Polyurethan-Hartschaumstoffabfälle mit einem Gemisch aus Glykol(en) und einem sekundären aliphatischen Amin, gegebenenfalls in Kombination mit Polyaminen mit primären und tertiären Aminogruppen umgesetzt.

Die Umsetzung der Tallöl- oder Rapsölfettsäuregemische mit dem Solvolysat erfolgt bevorzugt bei Temperaturen zwischen 150 und 250°C.

Vorteilhafte Weiterbildungen sind in den Unteransprüchen angegeben.

Eine Weiterbildung des Verfahrens sieht vor, dass die Umsetzung des Fettsäuregemisches mit dem Solvolysat kontinuierlich durchgeführt wird.

In einer Ausgestaltung des Verfahrens wird die Umsetzung des Fettsäuregemisches mit dem Solvolysat diskontinuierlich, z.B. in Rührreaktoren durchgeführt.

In einer Ausgestaltung des Verfahrens werden Gemische von zwei oder mehr Glykolen eingesetzt.

Eine Weiterbildung des erfindungsgemäßen Verfahrens sieht vor, dass ein Glykol Dipropylenglykol ist. Bevorzugt kann Dipropylenglykol im Gemisch mit Diethylenglykol eingesetzt werden.

In einer vorteilhaften Ausgestaltung des Verfahrens werden Gemische von zwei oder mehr Aminen eingesetzt.

In einer weiteren Ausgestaltung des Verfahrens ist eines der Amine Di-n-butylamin. Als Amingemisch wird bevorzugt ein Gemisch aus Di-n-butylamin und N,N-Bis(3-aminopropyl)-N-methylamin verwendet.

Eine Weiterbildung des erfindungsgemäßen Verfahrens sieht vor, dass die Tallöl- oder Rapsölfettsäuregemische vollständig während der Solvolysereaktion zudosiert werden.

In einer vorteilhaften Ausgestaltung des Verfahrens werden die Tallöl- oder Rapsölfettsäuregemische teilweise während der Solvolysereaktion und teilweise danach zudosiert.

Eine Weiterbildung des erfindungsgemäßen Verfahrens sieht vor, dass die Tallöl- oder Rapsölfettsäuregemische vollständig nach der Solvolysereaktion zudosiert werden.

Überraschend wurde gefunden, dass durch die Zugaben von Tallöl- oder Rapsölfettsäuregemischen während der Glykolyse/Aminolyse von Polyurethan-Hartschaumstoffen oder unmittelbar danach eine rasche Umsetzung der Carboxylgruppen mit etwa vorhandenen primären oder sekundären Aminogruppen erfolgt. Diese Umsetzung führt zur Bildung von Carbonsäureamiden, die in den Solvolyseprodukten vollständig löslich sind. Durch diese Umsetzung werden dem Reaktionsgemisch zur Thixotropie befähigte Stoffe entzogen. Die Amidbildung führt demzufolge zu einer Verringerung der Viskosität des Reaktionsgemisches, so dass höhere Anteile an Polyurethan-Hartschaumstoffen eingesetzt werden können. Darüber hinaus fördert der Zusatz der Tallöl- oder Rapsölfettsäuregemische die Zusammenballung von Fremdstoffen, so dass die Solvolysate wesentlich besser filtrierbar sind.

Zur Solvolyse werden Gemische aus mindestens einem Glykol und mindestens einem aliphatischen Amin verwendet.

Als Glykole werden vorzugsweise Ethylenglykol, Diethylenglykol, Triethylenglykol, Propylenglykol, Dipropylenglykol, Tripropylenglykol oder Gemische aus zwei oder mehreren dieser Glykole verwendet. Insbesondere wird Dipropylenglykol allein oder im Gemisch mit Diethylenglykol eingesetzt. Besonders bevorzugt wird Dipropylenglykol verwendet.

Als Amine werden vorzugsweise aliphatische Mono- oder Polyamine mit einem Siedepunkt oberhalb 110°C verwendet. Beispielsweise werden eingesetzt: Ethylendiamin, Diethylentriamin, Dipropylentriamin, N,N-Bis(3-aminopropyl)-N-methylamin, Din-butylamin, Triethylentetramin, Tripropylentetramin, N,N-Dicyclohexylamin und/oder N,N-Dihexylamin. Bevorzugt werden Gemische aus einem sekundären aliphatischen Amin und einem mindestens an einem Stickstoffatom substituierten Polyamin. Besonders bevorzugt ist die Verwendung von Di-n-butylamin gegebenenfalls im Gemisch mit N,N-Bis(3-aminopropyl)-N-methylamin.

Die Solvolyse wird bevorzugt bei Temperaturen zwischen 150 und 250°C durchgeführt, jedoch sind auch niedrigere oder höhere Umsetzungstemperaturen durchaus möglich.

Die Umsetzung der zwangsläufig durch Glykolyse entstehenden primären aromatischen Amine sowie eventuell vorhandener überschüssiger aliphatischer Amine mit den Tallöl- oder Rapsölfettsäuregemischen erfolgt entweder bereits während der Solvolyse der Hartschaumstoffe durch simultanes Zudosieren oder nach Abschluss der Solvolyse mit der berechneten Menge der Tallöl- oder Rapsölfettsäuregemische. Die Umsetzung der Amine mit den Fettsäuren erfolgt bei der gleichen Reaktionstemperatur. Der Reaktionsfortschritt wird über die entstehende Wassermenge im Destillat kontrolliert.

Tallöl- und Rapsölfettsäuregemische sowie ihre Herstellung sind bekannt.

Das erfindungsgemäß eingesetzte Tallölfettsäuregemisch besteht vorzugsweise zu mindestens 97 % aus Fettsäuren (Harzsäure-Anteil maximal 3 %). Bevorzugt sind im erfindungsgemäßen Gemisch enthalten:

Linolsäure und konjugierte C₁₈-Fettsäuren zu 45-65 Gew. %, Ölsäure zu 25-45 Gew. %, Octadeca-5,9,12-triensäure zu 5-12 Gew. % und gesättigte Fettsäuren zu 1-3 Gew. %. Besonders bevorzugt wird erfindungsgemäß ein hochgereinigtes Tallölfettsäuregemisch mit weniger als 2 % Harzsäuren und unverseifbaren Bestandteilen eingesetzt.

Das erfindungsgemäße Rapsölfettsäuregemisch umfasst bevorzugt: Palmitinsäure zu 1-5 Gew. %, Stearinsäure zu 1-4 Gew. % , Ölsäure zu 12-65 Gew. %, Linolsäure zu 12-30 Gew. %, Linolensäure zu 5-13 Gew. % und Eicosensäure zu 1-6 Gew. % sowie gegebenenfalls Erucasäure zu 0-52,5 Gew. %. Der Anteil an Unverseifbarem liegt bei <1,5 Gew. %. Bevorzugt wird ein Rapsölfettsäuregemisch eingesetzt, das reich an Ölsäure (50-65 Gew. %), Linolsäure (15-30 Gew. %) und Linolensäure (5-13 Gew. %) ist und Erucasäure nur in Spuren enthält.

Alle Gewichtsprozentangaben beziehen sich auf die Gesamtmenge an Fettsäuren im Gemisch.

Erfidungsgemäß bevorzugt wird als Tallölfettsäuregemisch ein Produkt unter dem Handelsnamen "Tallölfettsäure 2%" mit der CAS-Nummer 61790-12-3 (internationaler Bezeichnungsstandard für chemische Stoffe) verwendet.

Als bevorzugtes Rapsölfettsäuregemisch wird ein Produkt unter dem Handelsnamen "Rapsölfettsäure" mit der CAS-Nummer 85711-54-2 verwendet.

Diese Produkte können z.B. von der Conlac GmbH, Leipzig (Deutschland) oder Overlack Global/Chemical GmbH & Co. KG, Düsseldorf (Deutschland) bezogen werden.

Das Tallöl- oder Rapsölfettsäuregemisch wird bevorzugt in Mengen von 10 bis 40 Gew. %, vorzugsweise in Mengen von 10 bis 20 Gew. %, im Reaktionsgemisch eingesetzt. Diese Gewichtsprozentangabe bezieht sich auf das Gesamtgewicht der Reaktionskomponenten Polyurethan-Hartschaumstoff, Glykol(e) und Amine(e). In einer bevorzugten Ausführungsvariante kann die Umsetzung bereits mit 10 Gew. % an Fettsäuregemisch erfolgen. Besonders bevorzugt ist das Verfahren unter Verwendung von Tallölfettsäuregemisch.

Überraschend war bei den Untersuchungen die Tatsache, dass durch die Zugabe bereits geringer Mengen an Fettsäuregemischen (< 20 Gew. %, z. B. von 10 Gew.-%) zum Reaktionsgemisch, die Viskosität des Reaktionsprodukts drastisch reduziert und die Stabilität des Produkts deutlich verbessert werden konnte. Weiterhin zeigte es sich, dass vorhandene Fremdstoffe, z. B. unlösliche Kunststoffreste, Papierreste, Holzfaserteile, unspezifische Verunreinigungen, in eine besser filtrierbare Form gebracht wurden, so dass bereits mit einfachen Filtern klare und auch langzeitstabile Polyhydroxylkomponenten erhalten wurden. Dazu wurde beobachtet, dass die Aminzahl der Reaktionsprodukte deutlich gesenkt wurde, z. B. auf 10 bis 40% der in Vergleichsversuchen ohne Zusatz von langkettigen gesättigten und/oder ungesättigten Fettsäuren erhaltenen Aminzahlen. Eine Aminzahl von Null ist nicht zu erreichen, da zur Herstellung der Hartschaumstoffe tertiäre Amine als Katalysatoren eingesetzt werden, die nicht mit den langkettigen gesättigten und/oder ungesättigten Fettsäuren reagieren, auch keine Salze bilden, und daher weiter unverändert zur Katalyse der Urethanreaktion in Folgeschritten zur Verfügung stehen.

Die Umsetzungen können kontinuierlich oder diskontinuierlich erfolgen. Bei der kontinuierlichen Arbeitsweise werden Reaktoren nach der DE-OS 103 13 150 oder DE-OS 10 2005 038 375 verwendet werden. Die kontinuierliche Arbeitsweise erfolgt gemäß der in den genannten technischen Lehren beschriebenen Arbeitsweise mit der Besonderheit, dass zusätzlich eine weitere Dosiermöglichkeit zur Dosierung der Fettsäuren vorgesehen wird. Ansonsten können die beschriebenen Apparate für das erfindungsgemäße Verfahren genutzt werden.

Bei der diskontinuierlichen Arbeitsweise werden Rührreaktoren mit einem Heizmantel bevorzugt. Diese sollen außerdem mit Temperaturmessung und -regelung, einem geeigneten Rührer, einer Stickstoff- oder Schutzgaseinleitung, Dosiervorrichtungen für die Flüssigkeiten und den Polyurethan-Hartschaumstoff versehen sein. Außerdem ist für diese Reaktoren eine Kombination von Kolonne zur destillativen Abtrennung insbesondere von Wasser mit steuerbarer Temperatur über den Kolonnenmantel und Wärmetauscher zur Kühlung des Destillates vorgesehen. Zur Umsetzung nach dem erfindungsgemäßen Verfahren werden die Glykole, das/die Amin(e) vorgelegt und auf eine vorgegebene Temperatur erwärmt. In dieses erwärmte Gemisch wird der Feststoff derart dosiert, dass ein Klumpen im Reaktor vermieden wird und die Umsetzung ohne zu hohen Viskositätsanstieg erfolgt, was bedeutet, dass das Drehmoment des Rührers nicht zu hoch wird. Die Feststoffdosierung wird dazu über das Drehmoment des Rührers gesteuert. Die Zugabe der Fettsäuren erfolgt entweder während der Solvolyse oder danach. Die Umsetzung wird über die Menge des abdestillierten Wassers gesteuert.

Die Zugabe der Fettsäuregemische kann auf drei Wegen erfolgen:
(1) die gesamte Menge der Fettsäuregemische wird während der Solvolyse zudosiert,
(2) eine Teilmenge der Fettsäuregemische wird während der Solvolyse zudosiert und die Restmenge nach Abschluss der Solvolyse,
(3) die gesamte Menge der Fettsäuregemische wird nach Abschluss der Solvolysereaktion zudosiert.

Die Art der Dosierung ist abhängig von der Zusammensetzung des Reaktionsgemisches, der Art des Polyurethan-Schaumstoffs und der Reaktionstemperatur. Je höher die Temperatur während der Solvolyse desto früher sollte mit der Dosierung der Fettsäuregemische begonnen werden.

Die folgenden Beispiele erläutern die Erfindung weiter.

### Beispiele

### Beispiel 1

In einen 10 I Doppelmantelreaktor mit Rührer, Thermalölheizung, Widerstandsthermometer Pt100, Stickstoffeinleitung, Bodenablass und kombiniertem Wärmetauscher/Rückflusskühler werden 5,08 kg Dipropylenglykol und 0,52 kg Di-n-butylamin gegeben. Das Gemisch wird unter Rühren und Begasen mit Stickstoff auf 160°C erwärmt. Sobald die Temperatur erreicht ist, werden 2,4 kg pulverisierter Polyurethan-Hartschaumstoff zugegeben und die Temperatur dabei auf 230°C erhöht. Sobald 50% des Schaumstoffpulvers zugegeben wurden, werden langsam 0,8 kg Tallölfettsäuregemisch derart zugegeben, dass zum Ende der Zugabe des Hartschaumstoffs noch 0,25 kg vorhanden sind, die innerhalb der folgenden 15 Minuten zugegeben werden. Danach wird noch weitere 30 Minuten bei 230°C unter Stickstoff gerührt und das Solvolysat über ein Filter mit 120 mesh abgelassen. Man erhält eine Polyhydroxylkomponente mit einer Hydroxylzahl von 479 mg KOH/g, einer Aminzahl von 19 mg KOH/g und einer Viskosität (Rotation, 25°C) von 980 mPas.

### Vergleichsbeispiel

Der Versuch von Beispiel 1 wird wiederholt, jedoch wird das Gemisch der Tallölfettsäuren nicht zugegeben und die Umsetzung nach 30 Minuten Rühren bei 230°C beendet. Das dadurch erhaltene Solvolysat hat eine Hydroxylzahl von 502 mg KOH/g, einer Aminzahl von 38 mg KOH/g und einer Viskosität (Rotation, 25°C) von 14.000 mPas.

### Beispiel 2

Es wird die Apparatur von Beispiel 1 verwendet, jedoch werden 4,56 kg Dipropylenglykol, 0,55 kg Di-n-butylamin und 90 g N,N-Bis(3-aminopropyl)-N-methylamin vorgelegt und auf 165°C erwärmt. In das Gemisch werden unter Rühren und Begasen mit Stickstoff 2,8 kg pulverisierter Polyurethan-Hartschaumstoff innerhalb von 70 Minuten gegeben. Nach beendeter Zugabe wird die Umsetzung bei 230°C innerhalb von 40 Minuten zu Ende geführt. Danach werden zu dem Gemisch 0,95 kg Tallölfettsäuregemisch bei 230°C zugegeben und weitere 45 Minuten umgesetzt. Danach wird auf 60°C abgekühlt und das Reaktionsprodukt über den Bodenablass über ein Filter gewonnen. Man erhält eine Polyhydroxylkomponente mit einer Hydroxylzahl von 444 mg KOH/g, einer Aminzahl von 16 mg KOH/g und einer Viskosität (Rotation, 25°C) von 1020 mPas.

### Vergleichsbeispiel

Der Versuch von Beispiel 2 wird wiederholt, jedoch wird das Gemisch der Tallölfettsäuren nicht zugegeben und die Umsetzung nach 30 Minuten Rühren bei 230°C beendet. Das dadurch erhaltene Solvolysat hat eine Hydroxylzahl von 448 mg KOH/g, einer Aminzahl von 34 mg KOH/g und einer Viskosität (Rotation, 25°C) von 13.300 mPas.

### Beispiel 3

Es wird die Apparatur von Beispiel 1 verwendet, jedoch werden 3,0 kg Dipropylenglykol, 1,08 kg Diethylenglykol, 0,50 kg Di-n-butylamin und 140 g N,N-Bis(3-aminopropyl)-N-methylamin vorgelegt und auf 165°C erwärmt. In das Gemisch werden unter Rühren und Begasen mit Stickstoff 3,28 kg pulverisierter Polyurethan-Hartschaumstoff innerhalb von 80 Minuten gegeben. Nach beendeter Zugabe wird die Umsetzung bei 230°C innerhalb von 40 Minuten zu Ende geführt. Unmittelbar nach Beendigung der Zugabe des Hartschaumstoffpulvers werden zu dem Gemisch 1,05 kg Tallölfettsäuregemisch bei 230°C zugegeben und weitere 45 Minuten umgesetzt. Danach wird auf 60°C abgekühlt und das Reaktionsprodukt über den Bodenablass über ein Filter gewonnen. Man erhält eine Polyhydroxylkomponente mit einer Hydroxylzahl von 426 mg KOH/g, einer Aminzahl von 15 mg KOH/g und einer Viskosität (Rotation, 25°C) von 1110 mPas.

### Vergleichsbeispiel

Der Versuch von Beispiel 2 wird wiederholt, jedoch wird das Gemisch der Tallölfettsäuren nicht zugegeben und die Umsetzung nach 30 Minuten Rühren bei 230°C beendet. Das dadurch erhaltene Solvolysat hat eine Hydroxylzahl von 438 mg KOH/g, einer Aminzahl von 39 mg KOH/g und einer Viskosität (Rotation, 25°C) von 44.000 mPas.

### Beispiel 4

Es wird die Apparatur von Beispiel 1 verwendet, jedoch werden 3,1 kg Dipropylenglykol, 0,98 kg Diethylenglykol, 0,30 kg Di-n-butylamin und 0,24 kg N,N-Bis(3-aminopropyl)-N-methylamin vorgelegt und auf 165°C erwärmt. In das Gemisch werden unter Rühren und Begasen mit Stickstoff 3,68 kg pulverisierter Polyurethan-Hartschaumstoff innerhalb von 90 Minuten gegeben. Nach beendeter Zugabe wird die Umsetzung bei 230°C innerhalb von 40 Minuten zu Ende geführt. Unmittelbar nach Beendigung der Zugabe des Hartschaumstoffpulvers werden zu dem Gemisch 1,25 kg Tallölfettsäuregemisch bei 230°C zugegeben und weitere 50 Minuten umgesetzt. Danach wird auf 70°C abgekühlt und das Reaktionsprodukt über den Bodenablass über ein Filter gewonnen. Man erhält eine Polyhydroxylkomponente mit einer Hydroxylzahl von 419 mg KOH/g, einer Aminzahl von 15 mg KOH/g und einer Viskosität (Rotation, 25°C) von 1220 mPas.

### Vergleichsbeispiel

Der Versuch von Beispiel 2 wird wiederholt, jedoch wird das Gemisch der Tallölfettsäuren nicht zugegeben und die Umsetzung nach 30 Minuten Rühren bei 230°C beendet. Das dadurch erhaltene Solvolysat hat eine Hydroxylzahl von 404 mg KOH/g, einer Aminzahl von 36 mg KOH/g und einer Viskosität (Rotation, 25°C) von 79.000 mPas.

### Beispiel 5

Es wird die Apparatur von Beispiel 1 verwendet, jedoch werden 3,06 kg Dipropylenglykol, 0,40 kg Di-n-butylamin und 40 g N,N-Bis(3-aminopropyl)-N-methylamin vorgelegt und auf 165°C erwärmt. In das Gemisch werden unter Rühren und Begasen mit Stickstoff 2,5 kg pulverisierter Polyurethan-Hartschaumstoff innerhalb von 80 Minuten gegeben. Nach beendeter Zugabe wird die Umsetzung bei 230°C innerhalb von 40 Minuten zu Ende geführt. Sobald 75 % des Hartschaumstoffpulvers eingetragen sind, werden zu dem Gemisch 2,5 kg Tallölfettsäuregemisch bei 230°C zugegeben und weitere 45 Minuten umgesetzt. Danach wird auf 60°C abgekühlt und das Reaktionsprodukt über den Bodenablass über ein Filter gewonnen. Man erhält eine Polyhydroxylkomponente mit einer Hydroxylzahl von 420 mg KOH/g, einer Aminzahl von 14 mg KOH/g und einer Viskosität (Rotation, 25°C) von 860 mPas.

### Vergleichsbeispiel

Der Versuch von Beispiel 5 wird wiederholt, jedoch wird das Gemisch der Tallölfettsäuren nicht zugegeben und die Umsetzung nach 30 Minuten Rühren bei 230°C beendet. Das dadurch erhaltene Solvolysat hat eine Hydroxylzahl von 424 mg KOH/g, einer Aminzahl von 34 mg KOH/g und einer Viskosität (Rotation, 25°C) von 65.000 mPas.

### Beispiel 6

Es wird die Apparatur von Beispiel 1 verwendet, jedoch werden 3,22 kg Dipropylenglykol, 0,30 kg Di-n-butylamin und 80 g N,N-Bis(3-aminopropyl)-N-methylamin vorgelegt und auf 165°C erwärmt. In das Gemisch werden unter Rühren und Begasen mit Stickstoff 3,5 kg pulverisierter Polyurethan-Hartschaumstoff innerhalb von 60 Minuten gegeben. Nach beendeter Zugabe wird die Umsetzung bei 230°C innerhalb von 40 Minuten zu Ende geführt. Unmittelbar nach Beendigung der Zugabe des Hartschaumstoffpulvers werden zu dem Gemisch 1,5 kg Tallölfettsäuregemisch bei 230°C zugegeben und weitere 45 Minuten umgesetzt. Danach wird auf 60°C abgekühlt und das Reaktionsprodukt über den Bodenablass über ein Filter gewonnen. Man erhält eine Polyhydroxylkomponente mit einer Hydroxylzahl von 396 mg KOH/g, einer Aminzahl von 15 mg KOH/g und einer Viskosität (Rotation, 25°C) von 940 mPas.

### Vergleichsbeispiel

Der Versuch von Beispiel 6 wird wiederholt, jedoch wird das Gemisch der Tallölfettsäuren nicht zugegeben und die Umsetzung nach 30 Minuten Rühren bei 230°C beendet. Das dadurch erhaltene Solvolysat hat eine Hydroxylzahl von 405 mg KOH/g, einer Aminzahl von 52 mg KOH/g und einer Viskosität (Rotation, 25°C) von 55.000 mPas.

### Beispiel 7

In einen kontinuierlichen Reaktor nach DE-OS 103 13 150 wird ein kontinuierlicher Strom von 11 kg/h Dipropylenglykol und 1 kg/ Di-n-butylamin geleitet. Über die Dosieröffnung für Feststoffe werden 8 kg/h pulverisierter Polyurethan-Hartschaumstoff zudosiert. Die Temperatur des Mantels wird auf 255°C, die der Schnecken auf 240°C eingestellt. Über eine weitere Dosierpumpe werden im letzten Drittel des Reaktorraumes 3,5 kg/h Rapsölfettsäuren zudosiert. Im Reaktorauslauf befindet sich ein Doppelkammerfilter mit 120 mesh Maschenweite, über den das Reaktionsprodukt in einen Nachreaktor von 40 I Volumen abgelassen wird. In diesem Behälter wird das Gemisch unter Rühren bei 230°C 30 Minuten gehalten und dann in den Tank abgepumpt.

Man erhält eine Polyhydroxylkomponente mit einer Hydroxylzahl von 423 mg KOH/g, einer Aminzahl von 16 mg KOH/g und einer Viskosität (Rotation, 25°C) von 1150 mPas.

## Patentansprüche

1. Verfahren zur Herstellung von Polyolkomponenten aus Polyurethan-Hartschaumstoffabfällen durch Solvolyse, **dadurch gekennzeichnet, dass** die Polyurethan-Hartschaumstoffe mit einem an sich bekannten Gemisch aus einem oder mehreren Glykolen und einem oder mehreren aliphatischen Aminen umgesetzt werden, wobei während und/oder nach der Solvolysereaktion ein Tallölfettsäuregemisch umfassend Linolsäure und konjugierte C₁₈-Fettsäuren, Ölsäure, Octadeca-5,9,12-triensäure und gesättigte Fettsäuren oder ein Rapsölfettsäuregemisch umfassend Palmitinsäure, Stearinsäure, Ölsäure, Linolsäure, Linolensäure und Eicosensäure zudosiert wird.

2. Verfahren nach Anspruch 1, **dadurch gekennzeichnet, dass** die Umsetzung des Tallöl- oder Rapsölfettsäuregemisches mit dem Solvolysat bei Temperaturen zwischen 150 und 250°C durchgeführt wird.

3. Verfahren nach Anspruch 1 oder 2, **dadurch gekennzeichnet, dass** die Umsetzung des Tallöl- oder Rapsölfettsäuregemisches mit dem Solvolysat kontinuierlich oder diskontinuierlich durchgeführt wird.

4. Verfahren nach einem der Ansprüche 1 bis 3, **dadurch gekennzeichnet, dass** die Umsetzung mit 10 bis 40 Gew. % an Tallöl- oder Rapsölfettsäuregemisch bezogen auf das Gesamtgewicht der Reaktionskomponenten Polyurethan-Hartschaumstoff, Glykol(e) und Amine(e) erfolgt, vorzugsweise mit 10 bis 20 Gew. %.

5. Verfahren nach einem der Ansprüche 1 bis 4, **dadurch gekennzeichnet, dass** als Glykol ein Glykolgemisch eingesetzt wird, vorzugsweise ein Gemisch aus Dipropylenglykol und Diethylenglykol.

6. Verfahren nach einem der Ansprüche 1 bis 4, **dadurch gekennzeichnet, dass** als Glykol Dipropylenglykol eingesetzt wird.

7. Verfahren nach einem der Ansprüche 1 bis 6, **dadurch gekennzeichnet, dass** als aliphatische Amine sekundäre aliphatische Amine, gegebenenfalls im Gemisch mit Polyaminen mit primären und tertiären Aminogruppen eingesetzt werden.

8. Verfahren nach einem der der Ansprüche 1 bis 7, **dadurch gekennzeichnet, dass** als Amin Di-n-butylamin eingesetzt wird.

9. Verfahren nach Anspruch 7 oder 8, **dadurch gekennzeichnet, dass** ein Gemisch aus Di-n-butylamin und N,N-Bis(3-aminopropyl)-N-methylamin eingesetzt wird.

10. Verfahren nach einem der Ansprüche 1 bis 9, **dadurch gekennzeichnet, dass**
das Fettsäuregemisch während der Solvolysereaktion zudosiert wird.

11. Verfahren nach einem der Ansprüche 1 bis 9, **dadurch gekennzeichnet, dass**
das Fettsäuregemisch während der Solvolysereaktion und nach Abschluss der Solvolysereaktion zudosiert wird.

12. Verfahren nach einem der Ansprüche 1 bis 9, **dadurch gekennzeichnet, dass**
das Fettsäuregemisch nach Abschluss der Solvolysereaktion zudosiert wird.
